# EUROPEAN PATENT SPECIFICATION

(11) **EP 3 509 056 B1**
(45) Date of publication and mention of the grant of the patent: **27.07.2022**
(21) Application number: 17846049.9
(22) Date of filing: 07.08.2017
(51) Int. Cl.: G09G 3/34, B60K 35/00, G03B 21/00, G03B 21/14, G09G 3/20, H04N 5/74

(54) **PROJECTION-TYPE DISPLAY DEVICE**
PROJEKTORÄHNLICHE ANZEIGEVORRICHTUNG
DISPOSITIF D'AFFICHAGE DE TYPE À PROJECTION

(30) Priority: 31.08.2016 JP 2016169175
(43) Date of publication of application: 10.07.2019
(73) Proprietor: Nippon Seiki Co., Ltd., Nagaoka-shi, Niigata 940-8580 (JP)
(72) Inventor: MORIYAMA, Kohei, Nagaoka Niigata (JP); HADA, Makoto, Nagaoka Niigata (JP)
(74) Representative: Carpmaels & Ransford LLP
(86) International application number: PCT/JP2017/028524
(87) International publication number: WO 2018/043040

(56) References cited:
- EP-A1- 2 763 129
- WO-A1-2013/046774
- WO-A1-2013/129040
- WO-A1-2014/050497
- JP-A- 2007 122 018
- US-A1- 2009 147 154

## Description

### Technical Field

The present invention relates to a projection-type display device. The invention specifically relates to a projection-type display device capable of adjusting the brightness of an image to be displayed for each section.

### Background Art

As one kind of display devices, known is a projection-type display device that projects a generated image onto an arbitrary screen and the like accordingly to display the image. The projection-type display device is, for example, performs spatial light modulation of light of three colors of a red color, a green color, and a blue color corresponding to the primary colors of light using an optical modulation element such as a digital micromirror device (DMD) accordingly to form an image to be projected.

The projection-type display device that uses the DMD displays an image by employing what is called a field sequential driving method in which at least one light-emitting element is caused to emit light for each sub-frame obtained by temporally dividing a frame for which an image is formed. The DMD includes a plurality of micro-mirrors corresponding to respective pixels of an image to be displayed, and drives these micro-mirrors individually for each sub-frame so as to be set in one inclined state of two inclined states, so that a full color image is displayed by light that is reflected in a prescribed direction by the micro-mirror, among light emitted by the light-emitting elements.

However, as the time being in one inclined state of the two inclined states becomes longer, the micro-mirrors in the DMD are highly probably fixed to the one inclined state, which results in a concern that the lifetime of the DMD may be shortened. In order to solve this problem, for example, a projection-type display device disclosed in PTL 1 has been proposed.

In the projection-type display device disclosed in PTL 1, each frame for which an image is formed is divided into two periods of a display period that is a period when at least one element of the plurality of the light-emitting elements is caused to emit light, and a non-display period that is a period when none of the plurality of the light-emitting elements is
caused to emit light. The inclined state of the micro-mirror has no influence on the image to be displayed in the non-display period, so that it is possible to set the ratio of the respective inclined states within the non-display period for each of the plurality of micro-mirrors in accordance with the ratio of the respective inclined states within the display period for each of the plurality of micro-mirrors. As a result, it is possible to arbitrarily set the ratio of each inclined state of the two inclined states in the one frame as a whole, with respect to all the micro-mirrors, thereby resolving the concern that the lifetime of the DMD may be shortened.

Meanwhile, in a case where such a method is employed, a change in the brightness of an image to be displayed is limited to only a change in the brightness of the entire image by adjusting the light-emitting luminance of the light-emitting element. Therefore, the present inventors have recognized that there is room for improvement in the projection-type display device disclosed in PTL 1, in order to allow the brightness of an image to be displayed for each section to be changed. EP2763129A1 provides a display control means (92) that displays a display image (D) in display elements (30). An illumination control means (91) drives various illumination means (llr, 11g) in each subframe (SF) into which a frame (F) of the display image (D) is temporally divided, by a field sequential system. The frame (F) is provided with a display period (Fa) in which the display image (D) is displayed in the display elements (30) by the display control means (92) normally driving a plurality of pixels and the illumination control means (91) driving the illumination means (llr, 11g) and a non-display period (Fb) in which the display image (D) is not displayed in the display elements (30) by the display control means (92) engaging in non-display period drive of the plurality of pixels and the illumination control means (91) turning off the illumination means (11r, 11g).

WO2014050497A1 provides a display device that displays a predetermined image by the field sequential method. A frame includes a display period, and a non-display period while a DMD is being driven but no image is displayed. The ratio of the display period in the frame is uniform. The display device adjusts the driving current supplied to a light source by the following method: by PWM control, required brightness has a duty ratio that is changed stepwise between a first brightness and a second brightness, and between the second brightness and a third brightness; and by PAM control, the current value of the driving current is changed between the first brightness and the second brightness in such a manner that the current value gradually decreases from the first brightness toward the second brightness, the current value is increased at a changing point of the duty ratio, and the current value of the driving current is changed between the second brightness and the third brightness in such a manner that the current value gradually decreases from the second brightness toward the third brightness.

### Citation List

PTL 1: JP-A-2014-10417

### Summary of Invention

One object of the invention is to provide a projection-type display device capable of changing the brightness of an image to be displayed for each section. Another object of the invention will be apparent for persons skilled in the art with reference to the aspects, the preferred embodiment, and the attached drawings, which are exemplified below.

The invention is set out in the appended set of claims

### Brief Description of the Drawings

[Fig. 1] Fig. 1 is a block diagram illustrating an example of the configuration of a projection-type display device in the invention.
[Fig. 2] Fig. 2 is a block diagram illustrating an example of the configuration inside a housing illustrated in Fig. 1.
[Fig. 3A] Fig. 3A is a diagram illustrating an example of the configuration of a reflection-type spatial optical modulation unit illustrated in Fig. 1.
[Fig. 3B] Fig. 3B is a diagram illustrating an examples in which a movable reflection element illustrated in Fig. 3A is in a first inclined state.
[Fig. 3C] Fig. 3C is a diagram illustrating an example in which the movable reflection element illustrated in Fig. 3A is in a second inclined state.
[Fig. 4] Fig. 4 is a diagram for explaining frames of an image to be displayed, which are divided by a control unit.
[Fig. 5] Fig. 5 is a timing chart diagram illustrating movable reflection elements and a light source unit.
[Fig. 6] Fig. 6 is a timing chart diagram illustrating the movable reflection elements and the light source unit.
[Fig. 7] Fig. 7 is a diagram illustrating an example in which areas are reflected in the reflection-type spatial optical modulation unit illustrated in Fig. 3A.
[Fig. 8A] Fig. 8A is a graph for explaining a relation between an external illuminance and a light-emitting luminance of the light source unit.
[Fig. 8B] Fig. 8B is a graph for explaining a relation between the temperature of the reflection-type spatial optical modulation unit and the light-emitting luminance of the light source unit.

### Description of Embodiment

A preferred embodiment described below is used for easy understanding of the invention.

Accordingly, persons skilled in the art should be noted that the invention is not unduly limited by the embodiment to be described below.

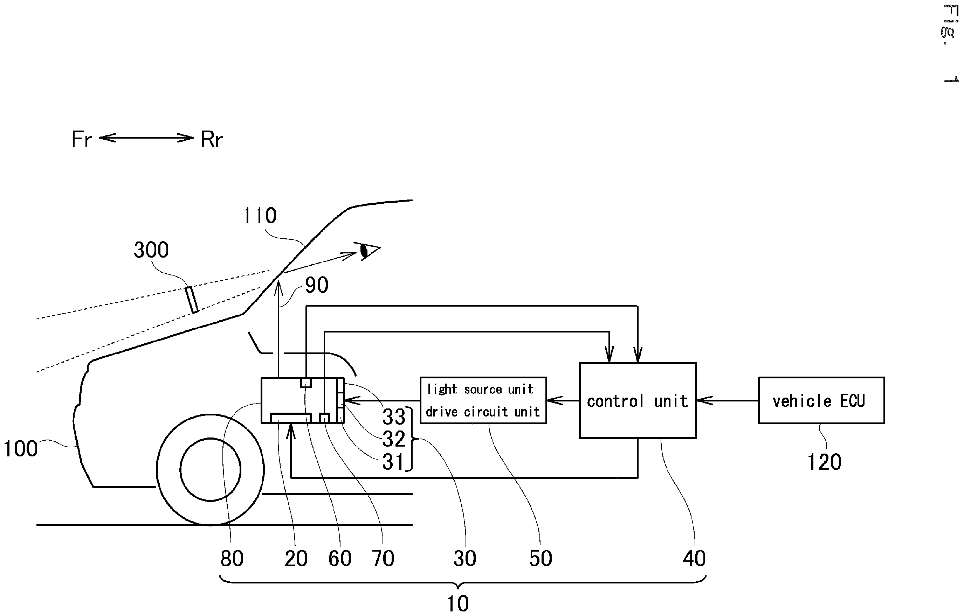

An example of an overall configuration of a projection-type display device 10 in the invention will be described. Fig. 1 illustrates, as one example of the projection-type display device 10, the projection-type display device (head-up display device) 10 to be mounted onto a vehicle 100. It should be noted that Fr illustrated in Fig. 1 represents the front seen from a vehicle driver of the vehicle 100, and Rr illustrated in Fig. 1 represents the rear seen from the vehicle driver of the vehicle 100.

Light 90 that configures an image formed by the projection-type display device 10 is reflected by a front window shield 110 and enters a position of a viewpoint of the vehicle driver, so that the vehicle driver of the vehicle 100 can visually identify a virtual image 300 in front of the front window shield 110. The vehicle driver of the vehicle 100 can visually identify the virtual image 300, for example, in a state where at least a part of scenery that can be seen over the front window shield 110 and the virtual image 300 are superimposed on each other.

The projection-type display device 10 is provided with a reflection-type spatial optical modulation unit 20, a light source unit 30, and a control unit 40. The projection-type display device 10 may be further provided with, for example, a light source unit drive circuit unit 50, an external illuminance acquisition unit 60, and a temperature acquisition unit 70. Moreover, the reflection-type spatial optical modulation unit 20, the light source unit 30, the external illuminance acquisition unit 60, and the temperature acquisition unit 70 are housed in a housing 80.

As the reflection-type spatial optical modulation unit 20, a digital micromirror device (DMD) 20 is employed. The DMD 20 spatial-light-modulates light emitted by the light source unit 30 under the control by the control unit 40 accordingly to form an image. The DMD 20 is provided with a plurality of micro-mirrors 21 that are movable reflection elements 21, and a DMD base substrate 26 that is a reflection element drive circuit board 26. Inclined states of the respective micro-mirrors 21 can be switched such that the respective micro-mirrors 21 are individually set to either one of a first inclined state and a second inclined state depending on a change in potential that is applied thereto by the DMD base substrate 26. The configuration and the inclined state of the micro-mirrors 21 are described later.

The light source unit 30 includes a plurality of light-emitting elements such as light emitting diodes (LEDs) that emit light due to the supply of drive currents from the light source unit drive circuit unit 50. In order to enable the projection-type display device 10 to form a color image, the light source unit 30 includes, for example, a red LED 31, a green LED 32, and a blue LED 33 corresponding to the primary colors of light so as to obtain white light. It should be noted that although an example in which the red LED 31, the green LED 32, and the blue LED 33 are employed as light-emitting elements in the light source unit 30 is described in the present embodiment, the light-emitting elements in the light source unit 30 may be, for example, other semiconductor light-emitting elements such as semiconductor lasers. Moreover, the light source unit 30 may include a plurality of LEDs per one color.

The light source unit drive circuit unit 50 supplies a drive current that is in accordance with a pulse width modulation (PWM) signal and is received from the control unit 40, to the light source unit 30. When the light source unit 30 includes three LEDs, the light source unit drive circuit unit 50 may include three drive circuits such that drive currents can be individually supplied to the three LEDs.

The control unit 40 is a micro computer that takes charge of the overall control of the projection-type display device 10, and includes a processing unit, a storage unit, and an input-output unit, none of which is illustrated. The processing unit includes, for example, a single or a plurality of micro processors, a micro controller, an application specific integrated circuit (ASIC), a field-programmable gate array (FPGA), and any other integrated circuit (IC). The storage unit includes, for example, a single or a plurality of memories capable of storing a program and/or data, such as a rewritable random access memory (RAM), a reading dedicated read only memory (ROM), an erasable program reading dedicated electrically erasable programmable read-only memory (EEPROM), and a flash memory that is a nonvolatile memory. The input-output unit includes an input-output port that is directly connected to the reflection-type spatial optical modulation unit 20, the light source unit drive circuit unit 50, the external illuminance acquisition unit 60, the temperature acquisition unit 70, or other not-illustrated devices. Moreover, The input-output unit includes a communication unit or the like that is connected to a communication line of a not-illustrated network such as a controller area network (CAN), and allow information to be input from a vehicle electronic control unit (ECU) 120 that is connected to the communication line.

The external illuminance acquisition unit 60 is configured so as to be capable of acquiring an external illuminance that is an illuminance outside the projection-type display device 10. In the example illustrated in Fig. 1, the external illuminance acquisition unit 60 is an illuminance sensor that is attached to the housing 80 and includes light-receiving elements such as a photo diode, a photo IC diode, and a photo transistor. The external illuminance acquisition unit 60 may be the external illuminance acquisition unit 60 that is dedicated to the projection-type display device 10 and is directly connected to the control unit 40 as illustrated in Fig. 1, or may be the shared external illuminance acquisition unit 60 that is directly connected to the control unit 40 or is connected to the control unit 40 via a communication line of a not-illustrated network and is used for other usage purposes. The other usage purposes include, for example, an auto-light system that causes headlights to automatically illuminate in accordance with the brightness of the outside of the vehicle. When the shared external illuminance acquisition unit 60 is employed, the external illuminance acquisition unit 60 may be attached to a vehicle interior side of the front window shield 110.

The temperature acquisition unit 70 includes a temperature sensor including a thermistor and the like that are embedded in a ceramic portion of the DMD base substrate 26, and an A/D converter. The temperature sensor measures the temperature of the micro-mirrors 21, and the A/D converter converts analog data output from the temperature sensor into digital data, and outputs temperature data T to the control unit 40. It should be noted that the A/D converter may be embedded in the control unit 40. Moreover, the temperature sensor may measure not the temperature of the micro-mirrors 21 but also the temperature inside the housing 80 or in the surrounding of the housing 80 that influences on the temperature of the micro-mirrors 21. In addition, the temperature sensor may be placed on a control substrate (which is not illustrated) on which the control unit 40 is mounted, and the temperature sensor on the control substrate may remotely measure the temperature of the micro-mirrors 21.

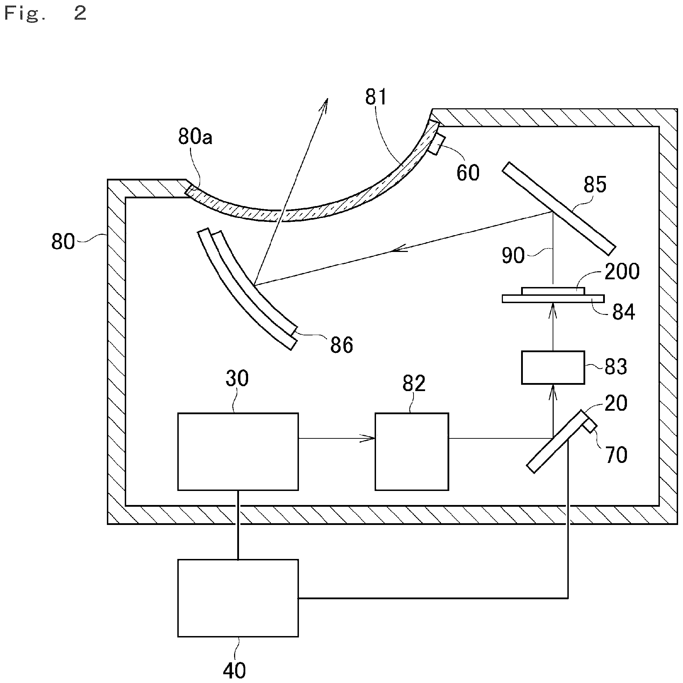

Fig. 2 illustrates an example of a configuration inside the housing 80. The housing 80 is formed in a box shape with black color hard resin having a light blocking effect. An opening portion 80a having a prescribed size is formed on an upper part of the housing 80. A cover 81 made of a transparent resin is attached over the opening portion 80a, for example.

The housing 80 houses therein the light source unit 30, an illumination optical system 82, the DMD 20, the temperature acquisition unit 70, a projection optical system 83, a screen 84, a plane mirror 85, a concave mirror 86, and the like at prescribed positions. The illumination optical system 82 includes, for example, a concave lens, and adjusts light emitted from the light source unit 30 to the size of the DMD 20. The projection optical system 83 includes, for example, a concave lens or a convex lens, is an optical system for irradiating with high efficiency the screen 84 with light 90 constituting a displayed image 200 projected by the DMD 20.

The screen 84 includes a diffusion plate, a holographic diffuser, a micro lens array, and the like, and is a transmission type screen that receives the light 90 constituting the displayed image 200 projected by the DMD 20 on a lower surface thereof, and forms the displayed image 200 on an upper surface thereof. The plane mirror 85 is obtained, for example, by forming a reflection film on a surface of a base material including a synthesize resin and a glass material by a method such as vapor deposition, and causes the light 90 having passed through the screen 84 and constituting the displayed image 200 to reflect toward the concave mirror 86. The concave mirror 86 is obtained, for example, by forming a reflection film having a concave face on a surface of a base material including a synthesize resin and a glass material by a method such as vapor deposition, and further reflects the light 90 having been reflected on the plane mirror 85 toward an opening portion 80a. This allows a user to visually identify the virtual image 300 to be image-formed in a state where the displayed image 200 having been image-formed on the screen 84 is enlarged.

Moreover, as illustrated in Fig. 2, the external illuminance acquisition unit 60 is attached, for example, to a position on which external light is incident, of an inner side of the cover 81 made of a transparent resin. Moreover, as illustrated in Fig. 2, the temperature acquisition unit 70 is attached to a position of the DMD 20 at which the temperature of the micro-mirrors 21 is capable of being measured.

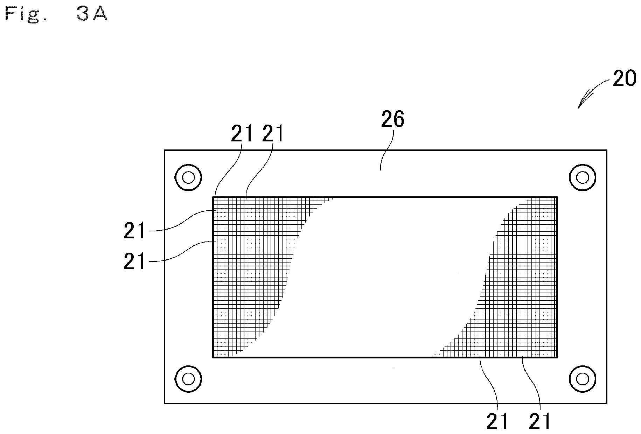

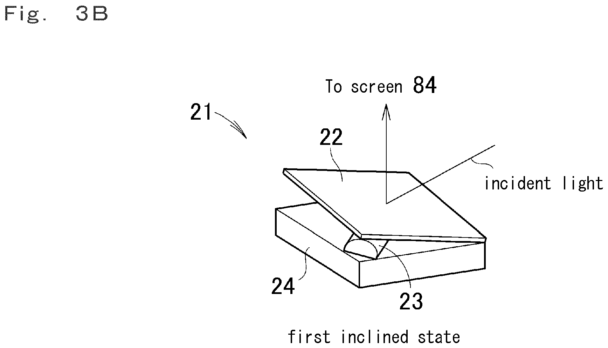

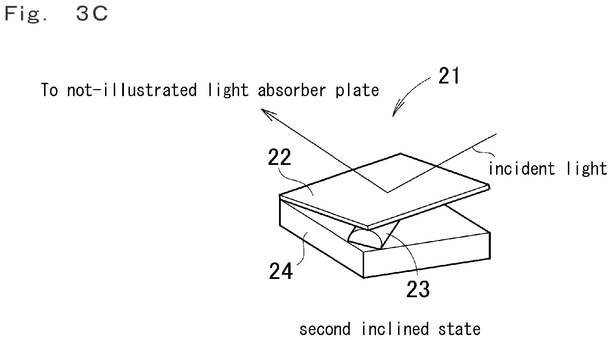

With reference to Fig. 3A, Fig. 3B, and Fig. 3C, an example of the configuration of the DMD 20 and the operation of the micro-mirrors 21 will be described. As illustrated in Fig. 3A, the DMD 20 includes the plurality of the micro-mirrors 21, and the DMD base substrate 26 that supports these micro-mirrors 21. The plurality of the micro-mirrors 21 respectively correspond to pixels of the displayed image 200. The DMD base substrate 26 includes a complementary metal oxide semiconductor (CMOS) integrated circuit, changes a potential to be applied to each micro-mirror 21 in accordance with a control signal input from the control unit 40, and switches the inclined states of the respective micro-mirrors 21 individually.

Fig. 3B illustrates the micro-mirror 21 in a first inclined state, and Fig. 3C illustrates the micro-mirror 21 in a second inclined state. The micro-mirror 21 generally includes a mirror surface 22, a hinge 23, and a base 24 including an electrode and the like, for example. A voltage is applied from the DMD base substrate 26 to the electrode on the base 24 to cause the mirror surface 22 to incline +12 deg or -12 deg, for example, using the hinge 23 as a fulcrum point. The micro-mirror 21 in the first inclined state illustrated in Fig. 3B is in a state where the mirror surface 22 is inclined +12 deg, for example, using the hinge 23 as a fulcrum point, and the micro-mirror 21 in the second inclined state illustrated in Fig. 3C is in a state where the mirror surface 22 is inclined -12deg, for example, using the hinge 23 as a fulcrum point.

As illustrated in Fig. 3B, the micro-mirror 21 when being in the first inclined state reflects light (incident light) of the light-emitting elements 31, 32, and 33 that has been passed through the projection optical system 83 and enters, to a direction of the screen 84. In contrast, as illustrated in Fig. 3C, the micro-mirror 21 when being in the second inclined state reflects light (incident light) of the light-emitting elements 31, 32, and 33 that has been passed through the projection optical system 83 and enters, to not the direction of the screen 84 but a direction of a not-illustrated light absorber plate. In other words, the micro-mirror 21 when being in the first inclined state is in an inclined state where light (incident light) that enters from the light-emitting elements 31, 32, and 33 is reflected as the light 90 constituting the displayed image 200. In contrast, the micro-mirror 21 when being in the second inclined state is in an inclined state where light (incident light) that enters from the light-emitting elements 31, 32, and 33 is not reflected as the light 90 constituting the displayed image 200. It should be noted that when a power supply of the projection-type display device 10 is in an OFF state, each micro-mirror 21 is stopped to be driven in an inclined state (for example 0 deg) that is a midway between the first inclined state and the second inclined state, for example.

The DMD 20 can switch each micro-mirror 21 by an order of microseconds (1/1000000 seconds) from the first inclined state to the second inclined state, or from the second inclined state to the first inclined state. In this manner, the control unit 40 can control whether light that enters from the light source unit 30 is reflected as the light 90 constituting the displayed image 200 for each one pixel of the displayed image 200, for each sub-frame SF obtained by a frame F being divided, which is described later and a cycle of the displayed image 200 being displayed. Hereinafter, by the control unit 40, a control so as to set the micro-mirror 21 in the first inclined state is also called ON control, and a control so as to set the micro-mirror 21 in the second inclined state is also called OFF control.

Hereinafter, an operation of the projection-type display device 10 will be described. The control unit 40 receives a video signal for displaying the displayed image 200 from a vehicle ECU 120 via a not-illustrated communication line. The control unit 40 generates illumination control data such that each of the light-emitting elements 31, 32, and 33 in the light source unit 30 emits light at the luminance of the light and the light-emitting timing that are demanded by this video signal, and controls the light source unit drive circuit unit 50 in accordance with this illumination control data accordingly to cause each of the light-emitting elements 31, 32, and 33 in the light source unit 30 to emit light. Simultaneously with this, the control unit 40 generates display control data such that the light 90 constituting the displayed image 200 demanded by the video signal is reflected by the plurality of the micro-mirrors 21 of the DMD 20, and controls the DMD base substrate 26 in accordance with this display control data to ON control or OFF control each micro-mirror 21.

The projection-type display device 10 displays the displayed image 200 by a field sequential driving method. Here, a general display method of the displayed image 200 by the field sequential driving method will be simply described.

Each frame F of the displayed image 200 includes the sub-frames SF that are divided into a plurality of periods. The control unit 40 outputs a PWM signal to each drive circuit of the light source unit drive circuit unit 50 such that the LED of one color among the red LED 31, the green LED 32, and the blue LED 33 emits light for each sub-frame SF at the light-emitting luminance and the light-emitting timing in accordance with the illumination control data. Simultaneously with this, the control unit 40 ON controls or OFF controls the plurality of the micro-mirrors 21 of the DMD 20 individually for each sub-frame SF, in accordance with the display control data. In this manner, the control unit 40 controls, for each sub-frame SF, whether light of a red color, a green color, or a blue color is reflected to the screen 84 as the light 90 constituting the displayed image 200, for each one pixel of the displayed image 200. As a result, the red color, the green color, and the blue color that are basic colors are additive mixed during the one frame F, so that the displayed image 200 is displayed as a full color image.

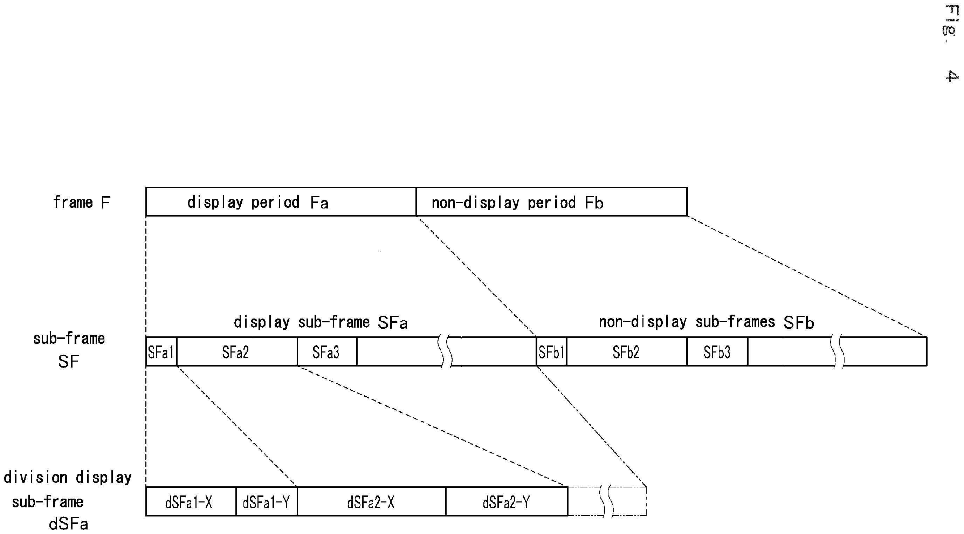

Subsequently, a display method of the displayed image 200 in the projection-type display device 10 of the invention will be described. As illustrated in Fig. 4, the control unit 40 divides each frame F into a display period Fa that is a period when at least one of the red LED 31, the green LED 32, and the blue LED 33 is caused to emit light, and a non-display period Fb that is a period when none of the LEDs is caused to emit light. The control unit 40 divides each of a plurality of display sub-frames SFa that is the sub-frame SF included in the display period Fa in the sub-frame SF is further divided into division display sub-frames dSFa that are a plurality of periods. In an example illustrated in Fig. 4, each display sub-frame SFa is divided into two periods of a period X and a period Y, and for example, a display sub-frame SFa1 is divided into a division display sub-frame dSFa1-X and a division display sub-frame dSFa1-Y. It should be noted that each display sub-frame SFa may be divided into three or more periods of the period X and the period Y, and other periods.

The control unit 40 causes one of the red LED 31, the green LED 32, and the blue LED 33 to emit light, for each display sub-frame SFa, at the light-emitting luminance and the light-emitting timing in accordance with the illumination control data. Simultaneously with this, the control unit 40 individually ON controls or OFF controls the plurality of the micro-mirrors 21 of the DMD 20, for each division display sub-frame dSFa, in accordance with the display control data. Here, the control unit 40 causes none of the red LED 31, the green LED 32, and the blue LED 33 to emit light, among a plurality of non-display sub-frames SFb that are the sub-frames SF included in the non-display period Fb in the sub-frame SF.

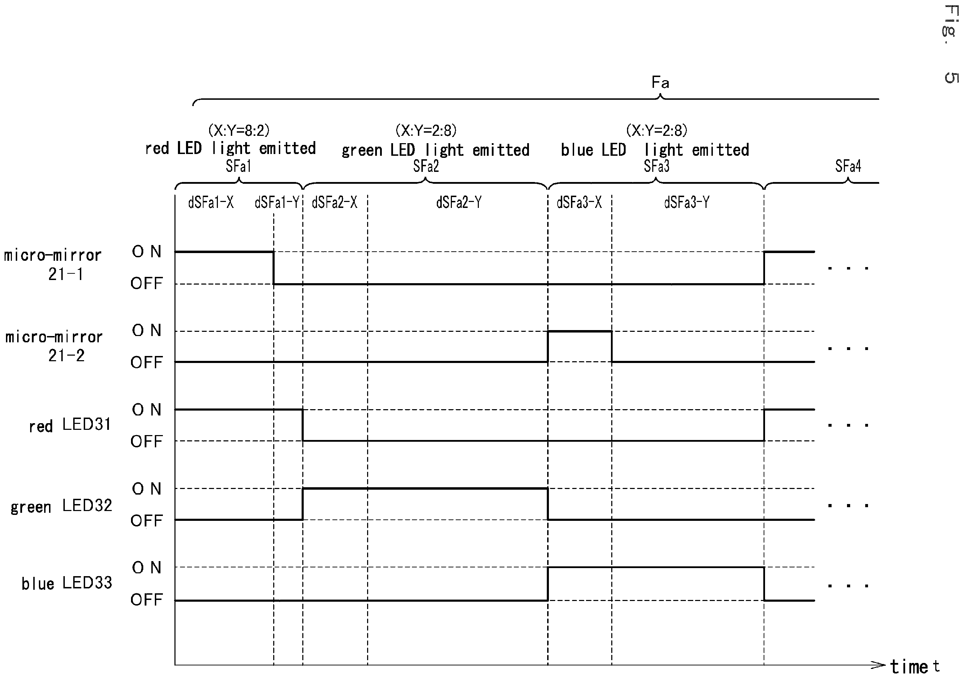

With reference to Fig. 5, a concrete example will be described. Fig. 5 illustrates driving states of a micro-mirror 21-1, a micro-mirror 21-2, the red LED 31, the green LED 32, and the blue LED 33 in a part of the display period Fa in the given one frame F. It should be noted that the micro-mirror 21-1 and the micro-mirror 21-2 are the micro-mirrors 21 different from each other.

Fig. 5 illustrates, in the display period Fa of the given one frame F, the display sub-frame SFa1, a display sub-frame SFa2, a display sub-frame SFa3, and a display sub-frame SFa4 (only a start portion). Moreover, each display sub-frame SFa is divided into two periods of a period X and a period Y, and the division ratio between the period X and the period Y is 6:4 in each display sub-frame SFa.

In the example illustrated in Fig. 5, the red LED 31 emits light in the display sub-frame SFa1, the green LED 32 emits light in the display sub-frame SFa2, the blue LED 33 emits light in the display sub-frame SFa3, and the red LED 31 emits light in the display sub-frame SFa4. In other words, only the red LED 31 is in an ON state in the display sub-frame SFa1, only the green LED 32 is in an ON state in the display sub-frame SFa2, only the blue LED 33 is in an ON state in the display sub-frame SFa3, and only the red LED 31 is in an ON state in the display sub-frame SFa4.

Moreover, in the example illustrated in Fig. 5, the micro-mirror 21-1 and the micro-mirror 21-2 is ON controlled in the display sub-frame SFa1 and the display sub-frame SFa3. Here, the micro-mirror 21-1 is ON controlled during both periods of the period X and the period Y, in the display sub-frame SFa1 and the display sub-frame SFa3. In contrast, the micro-mirror 21-2 is ON controlled only during the period X, and is OFF controlled during the period Y, in the display sub-frame SFa1 and the display sub-frame SFa3.

In this manner, in the frame F illustrated in Fig. 5, a pixel of the displayed image 200 corresponding to the micro-mirror 21-2 is displayed with color mixing in the same gradation step and the brightness of 6/10, with respect to a pixel of the displayed image 200 corresponding to the micro-mirror 21-1. For example, it is assumed that in a frame F' that is prior to the frame F illustrated in Fig. 5 by one frame, the micro-mirror 21-1 and the micro-mirror 21-2 have been ON controlled (ON control in the division display sub-frames dSFa1-X, dSFa1-Y, dSFa3-X, and dSFa3-Y) at the same timing as the micro-mirror 21-1 illustrated in Fig. 5. In that case, when the frame F illustrated in Fig. 5 is displayed, of the pixel of the displayed image 200 corresponding to the micro-mirror 21-1 and the pixel of the displayed image 200 corresponding to the micro-mirror 21-2, only the brightness of the pixel of the displayed image 200 corresponding to the micro-mirror 21-2 becomes dark.

As in the foregoing, in the projection-type display device 10 of the invention, the first inclined state or the second inclined state of the micro-mirror 21 can be set for each division display sub-frame dSFa, so that it is possible to change the brightness of the displayed image 200 for each section.

Moreover, the control unit 40 determines the ratio of periods of the plurality of the division display sub-frames dSFa obtained by each display sub-frame SFa being divided so as to be constant in all the display sub-frames SFa to allow the brightness of the displayed image 200 to be changed for each section, in a state where the gradation step of color mixing is kept. For example, when the total number of gradation steps of the respective colors in one frame F is 256, the display period Fa in the one frame F includes about eight display sub-frames SFa that allow 8-bit 256-gradation expression for each color. As the micro-mirror 21-1 illustrated in Fig. 5, the micro-mirror 21 is ON controlled or OFF controlled for each display sub-frame SFa before the division (the period X and the period Y are combined) to allow the gradation step of each color that displaces from 0 to 255 by one to be determined. Moreover, as the micro-mirror 21-2 illustrated in Fig. 5, the micro-mirror 21 is ON controlled or OFF controlled for each period X of each display sub-frame SFa before the division (OFF control in the periods Y) to allow the gradation step of each color in which the gradation step of each color displaces from 0×X/(X+Y) to 255×X/(X+Y) by X/(X+Y) to be determined.

The micro-mirror 21-2 illustrated in Fig. 5 indicates that the micro-mirror 21 is OFF controlled in the division display sub-frame dSFa of the period Y, and is ON controlled or OFF controlled in the division display sub-frame dSFa of the period X, by the control unit 40. However, conversely, as for the micro-mirror 21-2, the control unit 40 may OFF control in the division display sub-frame dSFa of the period X, and may ON control or OFF control the micro-mirror 21 in the division display sub-frame dSFa of the period Y. In other words, when the division ratio of the period X and the period Y in each display sub-frame SFa is set to 6:4, the control unit 40 can express each pixel of the displayed image 200 by three types of the brightness, including the brightness of 10/10 by performing ON control or OFF control in both of the period X and the period Y, the brightness of 6/10 by performing ON control or OFF control only in the period X and OFF control in the period Y, and the brightness of 4/10 by performing ON control or OFF control only in the period Y and OFF control in the period X.

In this manner, in both of the case where the micro-mirror 21 is ON controlled or OFF controlled as the micro-mirror 21-1 illustrated in Fig. 5, and the case where the micro-mirror 21 is ON controlled or OFF controlled as the micro-mirror 21-2 illustrated in Fig. 5, the total number of gradation steps of the respective colors in one frame F is 256. Accordingly, the control unit 40 determines the ratio of periods of the plurality of the division display sub-frames dSFa obtained by each display sub-frame SFa being divided so as to be constant (X:Y = 6:4 in the example illustrated in Fig. 5) in all the display sub-frames SFa to allow the brightness of the displayed image 200 to be changed for each section, in a state where the gradation step of color mixing is kept.

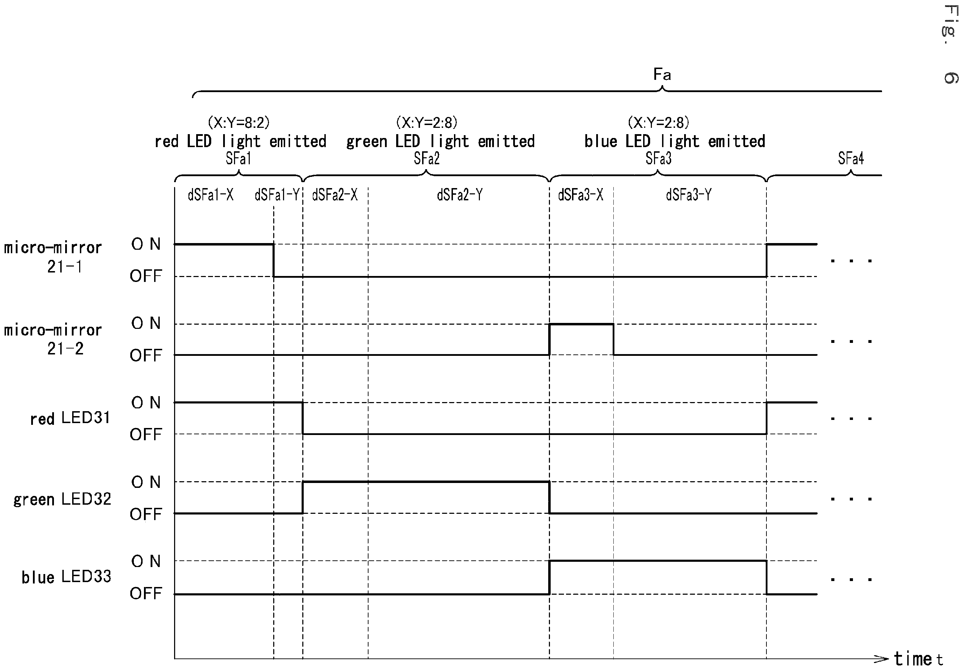

However, the control unit 40 may arbitrarily determine the ratio of periods of the plurality of the division display sub-frames dSFa obtained by each display sub-frame SFa being divided, for each display sub-frame SFa. Fig. 6 illustrates a part of an example of the display sub-frame SFa in which the red LED 31 is caused to emit light being divided into a plurality of the division display sub-frames dSFa with the ratio of the period X larger than that in the display sub-frame SFa in which the green LED 32 or the blue LED 33 is caused to emit light. In other words, in the example illustrated in Fig. 6, the division ratio of the period X and the period Y is 8:2 in the display sub-frame SFa1 in which the red LED 31 emits light, and the division ratio of the period X and the period Y is 2:8 in the display sub-frame SFa2 in which the green LED 32 emits light and in the display sub-frame SFa3 in which the blue LED 33 emits light.

In the example illustrated in Fig. 6, the micro-mirror 21-1 corresponds to a pixel in which the red color is displayed in monochrome in the displayed image 200, and the micro-mirror 21-2 corresponds to a pixel in which the blue color is displayed in monochrome in the displayed image 200. Moreover, in the example illustrated in Fig. 6, the micro-mirror 21-1 is ON controlled during the periods X in all the display sub-frames SFa in which the red LED 31 emits light, and the micro-mirror 21-2 is ON controlled during the periods X in all the display sub-frames SFa in which the blue LED 33 emits light.

As a result, as the display period Fa illustrated in Fig. 6 as a whole, the brightness of the red color in the pixel corresponding to the micro-mirror 21-1 is 8/10 times, compared with a case where each display sub-frame SFa is not divided into the division display sub-frames dSFa. Similarly, as the display period Fa illustrated in Fig. 6 as a whole, the brightness of the blue color in the pixel corresponding to the micro-mirror 21-2 is 2/10 times, compared with a case where each display sub-frame SFa is not divided into the division display sub-frames dSFa.

Accordingly, the control unit 40 arbitrarily determines the ratio of periods of the plurality of the division display sub-frames dSFa obtained by each display sub-frame SFa being divided, for each display sub-frame SFa to allow the brightness of the monochromatic display in the displayed image 200 to be determined for each color. For example, in the displayed image 200, the monochromatic display of a given color is displayed brighter than the monochromatic display of other colors to allow an attention to be urged to the vehicle driver of the vehicle 100 using the monochromatic display that is displayed brighter.

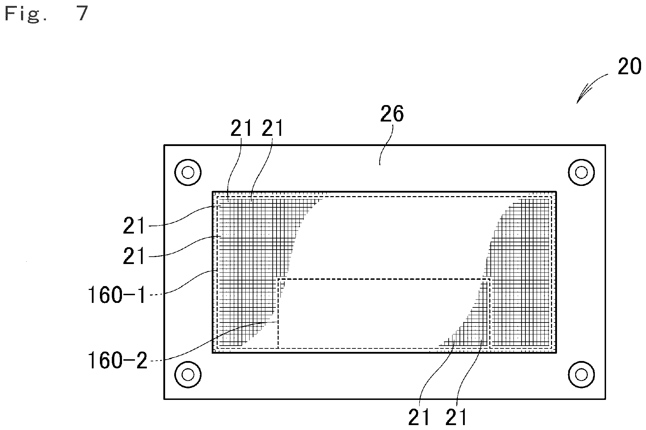

The control unit 40 may divide the plurality of the micro-mirrors 21 of the DMD 20 into a plurality of groups (areas) . Fig. 7 illustrates an example in which the plurality of the micro-mirrors 21 of the DMD 20 is divided into a first area 160-1 and a second area 160-2. The first area 160-1 and the second area 160-2 illustrated in Fig. 7 respectively correspond to areas in the screen 84 illustrated in Fig. 2. In this case, the control unit 40 may determine, among the division display sub-frames dSFa that is a plurality of periods obtained by each display sub-frame SFa being divided, the division display sub-frame dSFa in which the ON control of the micro-mirror 21 is prohibited for each of the plurality of the groups (areas) of the plurality of the micro-mirrors 21.

In an example illustrated in Fig. 7, each display sub-frame SFa is assumed to be divided into the two division display sub-frames dSFa that are two periods of the period X and the period Y. For example, in a given frame F, the control unit 40 allows the micro-mirrors 21 included in the first area 160-1 illustrated in Fig. 7 to be ON controlled in the two division display sub-frames dSFa that are both of the period of the period X and the period Y in each display sub-frame SFa, in accordance with a video signal. In other words, the control unit 40 allows the micro-mirrors 21 included in the first area 160-1 illustrated in Fig. 7 to be ON controlled, in all the division display sub-frames dSFa in accordance with a video signal (so as to include no division display sub-frame dSFa to be fixedly OFF controlled independent of a video signal) . Moreover, in the same frame F, the control unit 40 allows the micro-mirrors 21 included in the second area 160-2 illustrated in Fig. 7 to be ON controlled in only the division display sub-frame dSFa that is the period X in each display sub-frame SFa, in accordance with a video signal. In other words, the control unit 40 certainly OFF controls the micro-mirror 21 included in the second area 160-2 illustrated in Fig. 7, in the division display sub-frame dSFa that is the period Y, in each display sub-frame SFa, independent of a video signal.

With such controls, it is possible to change the brightness for each area in the displayed image 200. For example, an area including a specific mark (image of a specific type) in the displayed image 200 is displayed brighter to allow an attention to be urged to the vehicle driver of the vehicle 100 using the mark. Moreover, the brightness may be capable of being arbitrarily changed by an operation of the vehicle driver in the displayed image 200 for each area, or the brightness may be arbitrarily changed in the displayed image 200 for each area on the basis of change in operation status of the vehicle input from the vehicle ECU.

With that, the control unit 40 determines any one of a plurality of areas as an area where the control is capable of being switched to the ON control in accordance with a video signal in all the division display sub-frames dFa, it is possible to prevent the division display sub-frame dSFa that does not contribute as an image because although the light source unit 30 is lit, any of the micro-mirrors 21 are fixed to an OFF state, from being generated.

Moreover, the way to divide areas that differ in the brightness, the arrangement, the size, and the like in the DMD 20 may be changed on the basis of the change in the operation status of the vehicle input from the vehicle ECU. Moreover, the way to divide areas that differ in the brightness, the arrangement, the size, and the like in the DMD 20 may be changed depending on elapsed time after the prescribed areas has been formed. Such controls allow appropriate differences in intensity of the brightness for each region in the displayed image 200, so that it is possible to precisely notify the vehicle driver of necessary information in accordance with the operation status of the vehicle and the like.

Moreover, the control unit 40 ON controls or OFF controls the plurality of the micro-mirrors 21 in each non-display sub-frame SFb that is the sub-frame SF included in the above-mentioned non-display period Fb illustrated in Fig. 4. Preferably, the control unit 40 ON controls or OFF controls each micro-mirror 21 in the non-display period Fb such that the ratio of the time when each micro-mirror 21 becomes in the first inclined state and the time when in the second inclined state per one frame F or per the plurality of the frames F becomes a constant ratio. The ratio of the time when each micro-mirror 21 becomes in the first inclined state and the time when in the second inclined state per one frame F or per the plurality of the frames F becomes a constant ratio to prevent the micro-mirror 21 from being fixed to either one of the first inclined state and the second inclined state.

More preferably, the control unit 40 ON controls or OFF controls each micro-mirror 21 in the non-display period Fb such that the ratio of the time when each micro-mirror 21 becomes in the first inclined state and the time when in the second inclined state per one frame F or per the plurality of the frames F becomes 50:50. The ratio of the time when each micro-mirror 21 becomes in the first inclined state and the time when in the second inclined state per one frame F or per the plurality of the frames F becomes 50:50 to further prevent the micro-mirror 21 from being fixed to either one of the first inclined state and the second inclined state.

Moreover, the control unit 40 may further divide each of the plurality of the non-display sub-frames SFb that is the sub-frame SF included in the non-display period Fb in the sub-frame SF into divided non-display sub-frames dSFb that are a plurality of periods. In this case, the control unit 40 may ON control or OFF control each micro-mirror 21 for each non-display sub-frame dSFb such that the ratio of the time when each micro-mirror 21 becomes in the first inclined state and the time when in the second inclined state per one frame F or per the plurality of the frames F becomes a constant ratio. Each micro-mirror 21 is controlled for each divided non-display sub-frame dSFb in this manner to allow the ON control or the OFF control of each micro-mirror 21 in the non-display period Fb to be set more minutely, compared with a case where the non-display sub-frame SFb is not divided into a plurality of divided non-display sub-frames dSFb, for example.

Here, the ratio of the display period Fa and the non-display period Fb in each frame F is not necessarily the same. For example, the ratio of the display period Fa in each frame F is made large to allow the brightness of the entire displayed image 200 to be brighter. The control unit 40 determines the ratio of the display period Fa and the non-display period Fb in each frame F in accordance with external illuminance input from the external illuminance acquisition unit 60.

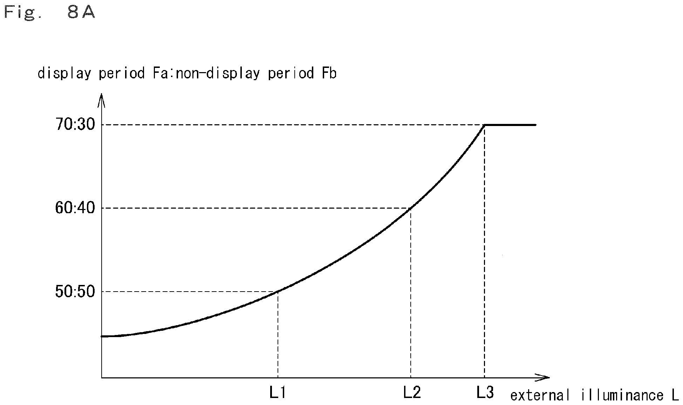

For example, Fig. 8A illustrates a relation between the external illuminance and the ratio of the display period Fa and the non-display period Fb in each frame F. In the graph illustrated in Fig. 8A, the horizontal axis represents external illuminance L that becomes larger toward the right side, and the longitudinal axis represents the ratio of the display period Fa and the non-display period Fb in each frame F in which the ratio of the display period Fa becomes large toward the upper side. For example, the relation between the external illuminance and the ratio of the display period Fa and the non-display period Fb in each frame F as illustrated in Fig. 8A is stored in the storage unit in the control unit 40.

In an example illustrated in Fig. 8A, the display period Fa : the non-display period Fb = 50:50 is obtained when the external illuminance L is a first external illuminance L1, the display period Fa : the non-display period Fb = 60:40 is obtained when the external illuminance L is a second external illuminance L2, and the display period Fa : the non-display period Fb = 70:30 is obtained when the external illuminance L is a third external illuminance L3. Moreover, in the example illustrated in Fig. 8A, the display period Fa : the non-display period Fb = 70:30 is fixed even when the external illuminance L is larger than the third external illuminance L3. This is because the non-display period Fb is secured to implement the ratio of the time when each micro-mirror 21 becomes in the first inclined state and the time when in the second inclined state per one frame F being a constant ratio in all the frames F.

It should be noted that the control unit 40 may adjust the electric power to be supplied to the light source unit 30 per one frame F, thereby adjusting the brightness of the entire displayed image 200. Specifically, the control unit 40 may change the current flowing through the light source unit 30, thereby adjusting the electric power to be supplied per one frame F, and changing the brightness of the entire displayed image 200. Alternatively, the control unit 40 may change a period (Duty ratio) when the current is flowed into the light source unit 30 in the sub-frame SF, thereby adjusting the electric power to be supplied per one frame F, and changing the brightness of the entire displayed image 200.

In addition, the control unit 40 may combine the change in the current or the Duty ratio as mentioned above and the ratio of the display period Fa and the non-display period Fb in each frame F, thereby changing the brightness of the entire displayed image 200. Specifically, for example, the control unit 40 may: when the external illuminance L falls in between the first external illuminance L1 and the second external illuminance L2, keep the display period Fa : the non-display period Fb = 70:30 and gradually change the current (or Duty ratio) of the light source unit 30 on the basis of the change in the external illuminance L; when the external illuminance L falls in between the second external illuminance L2 and the third external illuminance L3, may keep the display period Fa : the non-display period Fb = 50:50 and gradually change the current (or Duty ratio) of the light source unit 30 on the basis of the change in the external illuminance L; and when the external illuminance L is less than the third external illuminance L3, may keep the display period Fa : the non-display period Fb = 50:50 and gradually change the current (or Duty ratio) of the light source unit 30 on the basis of the change in the external illuminance L.

It should be noted that it is considered that as for the micro-mirror 21, the micro-mirror 21 is likely to be fixed to either one of the first inclined state and the second inclined state as the temperature of the micro-mirrors 21 becomes high. Therefore, the control unit 40 determines an upper limit of the ratio of the display period Fa in each frame F in accordance with the temperature (the temperature of the micro-mirrors 21) input from the temperature acquisition unit 70.

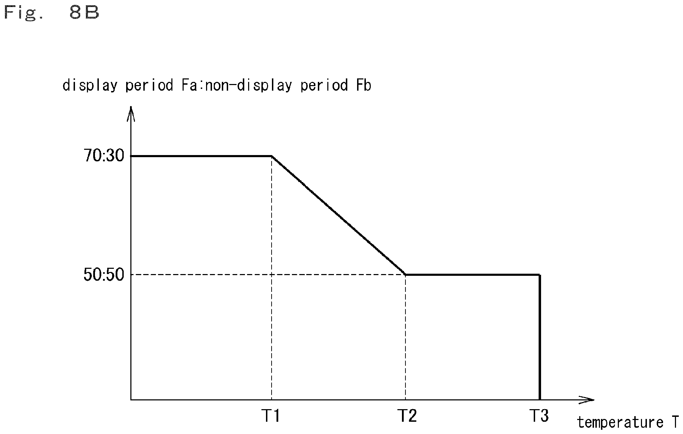

For example, Fig. 8B illustrates a relation between the temperature and the allowable ratio of the display period Fa and the non-display period Fb in each frame F. In the graph illustrated in Fig. 8B, the horizontal axis represents a temperature T in the surrounding or the interior of the projection-type display device 10 that becomes high toward the right side, and the longitudinal axis represents the allowable ratio of the display period Fa and the non-display period Fb in each frame F in which the ratio of the display period Fa becomes large toward the upper side. For example, the relation between the temperature T and the allowable ratio of the display period Fa and the non-display period Fb in each frame F as illustrated in Fig. 8B is stored in the storage unit in the control unit 40.

In the example illustrated in Fig. 8B, when the temperature T is lower than a first temperature T1, the display period Fa : the non-display period Fb = 70:30 is allowed in each frame F, when the temperature T is equal to or higher than the first temperature T1 and lower than a second temperature T2, the allowable ratio of the display period Fa in each frame F becomes smaller as the temperature T becomes higher than the first temperature T1, and when the temperature T is equal to or higher than the second temperature T2, the allowable ratio of the display period Fa in each frame F is fixed to 50. In other words, for example, even when the external illuminance L is the third external illuminance L3, the display period Fa : the non-display period Fb = 50:50 is obtained. It should be noted that when the temperature T is equal to or higher than the third temperature T3 that is higher than the second temperature T2, the ratio of the display period Fa may be set to 0 to stop the display of the displayed image 200.

It should be noted that the ratio of the display period Fa and the non-display period Fb does not gradually change on the basis of the change in the temperature T as illustrated in Fig. 8B, but may stepwisely change on the basis of the change in the temperature T. Specifically, for example, when the temperature T is lower than a first threshold, the display period Fa : the non-display period Fb = 70:30 may be obtained, when the temperature T is equal to or higher than the first threshold and lower than a second threshold that is the temperature higher than the first threshold, the display period Fa : the non-display period Fb = 60:40 may be obtained, and when the temperature T is equal to or higher than the second threshold, the display period Fa : the non-display period Fb = 50:50 may be obtained.

The invention is not limited to the abovementioned exemplary embodiment, and persons skilled in the art could easily change the abovementioned exemplary embodiment in a range within the scope of the claims.

### Industrial Applicability

The invention is preferable as a projection-type display device of vehicle information and road information such as a turn-by-turn display that is mounted on an automobile or a motorcycle, or a moving object provided with an agricultural machine or a construction machine, for example, in terms of the mirror unit.

### Reference Signs List

10 ... projection-type display device, 20 ... reflection-type spatial optical modulation unit, DMD, 21 ... movable reflection element, micro-mirror, 30 ... light source unit, 31 ... red LED, 32 ... green LED, 33 ... blue LED, 40 ... control unit, 50 ... light source unit drive circuit unit, 60 ... external illuminance acquisition unit, 70 ... temperature acquisition unit, 80 ... housing, 84 ... screen, 90 ... light constituting image to be displayed, 100 ... vehicle, 120 ... vehicle ECU, 200 ... displayed image, 300 ... virtual image of displayed image.

## Claims

1. A projection-type display device (10) comprising:
a light source unit (30) that includes a plurality of a light-emitting elements of different colours (31, 32, 33), wherein the elements of different colours emit light sequentially;
a reflection-type spatial optical modulation unit (20) that includes a plurality of movable reflection elements (21) an inclined state of which can be switched to either one of a first inclined state and a second inclined state, wherein the movable reflection element in the first inclined state reflects light (90) of the light-emitting element in a direction where the light (90) is projected as the light constituting an image (200), and
wherein the movable reflection element in the second inclined state reflects light of the light-emitting element in a direction where the light is not projected as the light constituting the image; and
a control unit that controls the reflection-type spatial optical modulation unit and the light source unit such that light constituting the image in accordance with a video signal to be input is projected,
wherein the control unit divides respective frames (F) of the image into a display period (Fa) that is a period when at least one element of the plurality of the light-emitting elements is caused to emit light, and a non-display period (Fb) that is a period when none of the plurality of the light-emitting elements is caused to emit light,
wherein the display period and the non-display period are subdivided into subframes (SF) and for the display period, several subframes (SFa) for each colour of the light source exist wherein the subframes of each colour are concurrent to the emission time of the respective colour of the light source during the display period,
wherein each subframe (SFa) of the display period is divided into a plurality of division display sub-frames (dSFa), and
wherein for every division display sub-frame the movable reflection element state is controlled to be in the first or second inclined state, and
wherein the control unit divides the plurality of the movable reflection elements in the reflection-type spatial optical modulation unit into a plurality of groups (160-1, 160-2), and determines, among the plurality of the division display sub-frames obtained by each display sub-frame being divided, the division display sub-frame in which the movable reflection element is fixed in the second inclined state, for each of the plurality of the groups of the plurality of the movable reflection elements.

2. The projection-type display device (10) according to claim 1, wherein the control unit determines any one of the plurality of the groups (160-1, 160-2) that is capable of being switched to the first inclined state in accordance with a video signal, in all the division display sub-frames (dSFa).

3. The projection-type display device (10) according to claim 1, wherein the control unit changes the plurality of the groups (160-1, 160-2) in accordance with a type of the image to be displayed and elapsed time after the plurality of the groups (160-1, 160-2) has been configured.

4. The projection-type display device (10) according to any one of claims 1 to 3, wherein the control unit controls the reflection-type spatial optical modulation unit to allow the inclined state of each of the plurality of the movable reflection elements to be set for each sub-frame included in the non-display period such that a ratio of time when each movable reflection element is in the first inclined state and time when in the second inclined state is constant per one frame or a plurality of the frames.

5. The projection-type display device according to any one of claims 1 to 4, wherein
the control unit further divides, among the plurality of the sub-frames (SF), each of a plurality of non-display sub-frames (SFb) that are the sub-frames included in the non-display period into a plurality of divided non-display sub-frames (dSFb), and
the control unit controls the reflection-type spatial optical modulation unit (20) to allow the inclined state of each of the plurality of the movable reflection elements (21) to be set for each divided non-display sub-frame (dSFb) included in the non-display period (Fb) such that a ratio of time when each movable reflection element is in the first inclined state and time when in the second inclined state is constant per one frame or a plurality of the frames.

6. The projection-type display device according to any one of claims 1 to 5, wherein the control unit determines a ratio of periods of the plurality of the division display sub-frames (dSFa) obtained by the display sub-frame being divided to be constant in the plurality of the display sub-frames (SFa).

7. The projection-type display device according to any one of claims 1 to 5, wherein the control unit arbitrarily determines a ratio of periods of the plurality of the division display sub-frames (dSFa) obtained by the display sub-frame (SFa) being divided, for each display sub-frame (SFa) .

## Patentansprüche

1. Projektionsartige Displayeinrichtung (10), umfassend:
eine Lichtquelleneinheit (30), die mehrere lichtemittierende Elemente aus verschiedenen Farben (31, 32, 33) enthält, wobei die Elemente aus verschiedenen Farben Licht sequentiell emittieren;
eine reflexionsartige räumlich-optische Modulationseinheit (20), die mehrere bewegliche Reflexionselemente (21) enthält, wobei ein gekippter Zustand derer entweder zu einem eines ersten gekippten Zustands und eines zweiten gekippten Zustands umgeschaltet werden kann, wobei das bewegliche Reflexionselement in dem ersten gekippten Zustand Licht (90) des lichtemittierenden Elements in einer Richtung reflektiert, wo das Licht (90) als das ein Bild (200) bildende Licht projiziert wird, und
wobei das bewegliche Reflexionselement in dem zweiten gekippten Zustand Licht von dem lichtemittierenden Element in einer Richtung reflektiert, wo das Licht nicht als das das Bild bildende Licht projiziert wird; und
eine Steuereinheit, die die reflexionsartige räumlich-optische Modulationseinheit und die Lichtquelleneinheit derart steuert, dass Licht, das das Bild gemäß einem einzugebenden Videosignal bildet, projiziert wird,
wobei die Steuereinheit jeweilige Frames (F) des Bilds in eine Displayperiode (Fa) unterteilt, die eine Periode ist, wenn bewirkt wird, dass mindestens ein Element der mehreren lichtemittierenden Elemente Licht emittiert, und eine Nichtdisplayperiode (Fb), die eine Periode ist, wenn nicht bewirkt wird, dass eine der mehreren lichtemittierenden Elemente Licht emittiert,
wobei die Displayperiode und die Nichtdisplayperiode in Subframes (SF) unterteilt werden und für die Displayperiode mehrere Subframes (SFa) für jede Farbe der Lichtquelle existieren, wobei die Subframes jeder Farbe gleichzeitig zu der Emissionszeit der jeweiligen Farbe der Lichtquelle während der Displayperiode sind,
wobei jeder Subframe (SFa) der Displayperiode in mehrere Unterteilungsdisplay-Subframes (dSFa) unterteilt wird, und
wobei für jeden Unterteilungsdisplay-Subframe der Zustand des beweglichen Reflexionselements so gesteuert wird, dass es sich in dem ersten oder zweiten gekippten Zustand befindet, und
wobei die Steuereinheit die mehreren der beweglichen Reflexionselemente in der reflexionsartigen räumlichoptischen Modulationseinheit in mehrere Gruppen (160-1, 160-2) unterteilt und unter den mehreren Unterteilungsdisplay-Subframes, dadurch erhalten, dass jeder Subframe unterteilt wird, den Unterteilungsdisplay-Subframe, in dem das bewegliche Reflexionselement in dem zweiten gekippten Zustand fixiert ist, für jede der mehreren der Gruppen der mehreren der beweglichen Reflexionselemente bestimmt.

2. Projektionsartige Displayeinrichtung (10) nach Anspruch 1, wobei die Steuereinheit in allen Unterteilungsdisplay-Subframes (dSFa) eine beliebige der mehreren der Gruppen (160-1, 160-2) bestimmt, die gemäß einem Videosignal zu dem ersten gekippten Zustand umgeschaltet werden kann.

3. Projektionsartige Displayeinrichtung (10) nach Anspruch 1, wobei die Steuereinheit die mehreren der Gruppen (160-1, 160-2) gemäß einer Art des anzuzeigenden Bilds und verstrichener Zeit, nachdem die mehreren der Gruppen (160-1, 160-2) konfiguriert worden sind, ändert.

4. Projektionsartige Displayeinrichtung (10) nach einem der Ansprüche 1 bis 3, wobei die Steuereinheit die reflexionsartige räumlich-optische Modulationseinheit steuert, damit der gekippte Zustand jedes der mehreren der beweglichen Reflexionselemente für jeden Subframe, der in der Nicht-Displayperiode enthalten ist, eingestellt werden kann, so dass ein Verhältnis aus einer Zeit, wenn jedes bewegliche Reflexionselement sich in dem ersten gekippten Zustand befindet, und einer Zeit, wenn in dem zweiten gekippten Zustand, pro ein Frame oder mehrere der Frames konstant ist.

5. Projektionsartige Displayeinrichtung nach einem der Ansprüche 1 bis 4, wobei
die Steuereinheit weiter unter den mehreren der Subframes (SF) jeden der mehreren Nichtdisplay-Subframes (SFb), die die in der Nichtdisplayperiode enthaltenen Subframes sind, in mehrere unterteilte Nichtdisplay-Subframes (dSFb) unterteilt, und
die Steuereinheit die reflexionsartige räumlich-optische Modulationseinheit (20) steuert, damit der gekippte Zustand jedes der mehreren der beweglichen Reflexionselemente (21) für jeden unterteilten Nichtdisplay-Subframe (dSFb), der in der Nichtdisplayperiode (Fb) enthalten ist, so eingestellt werden kann, dass ein Verhältnis aus einer Zeit, wenn jedes bewegliche Reflexionselement sich in dem ersten gekippten Zustand befindet, und einer Zeit, wenn in dem zweiten gekippten Zustand, pro ein Frame oder mehrere der Frames konstant ist.

6. Projektionsartige Displayeinrichtung nach einem der Ansprüche 1 bis 5, wobei die Steuereinheit ein Verhältnis aus Perioden der mehreren der Unterteilungsdisplay-Subframes (dSFa), erhalten dadurch, dass der Displaysubframe unterteilt wird, in den mehreren der Displaysubframes (SFa) konstant ist.

7. Projektionsartige Displayeinrichtung nach einem der Ansprüche 1 bis 5, wobei die Steuereinheit willkürlich ein Verhältnis von Perioden der mehreren der Unterteilungsdisplay-Subframes (dSFa), erhalten durch das Unterteilen des Displaysubframes (SFa), für jeden Displaysubframe (SFa) bestimmt.

## Revendications

1. Dispositif d'affichage de type à projection (10) comprenant :
une unité de source de lumière (30) qui comprend une pluralité d'éléments émetteurs de lumière de différentes couleurs (31, 32, 33), où les éléments de différentes couleurs émettent de la lumière de manière séquentielle ;
une unité de modulation optique spatiale de type à réflexion (20) qui comprend une pluralité d'éléments de réflexion mobiles (21) dont l'état d'inclinaison peut être commuté vers l'un ou l'autre d'un premier état d'inclinaison et d'un second état d'inclinaison, où l'élément de réflexion mobile dans le premier état d'inclinaison réfléchit la lumière (90) de l'élément émetteur de lumière dans une direction où la lumière (90) est projetée en tant que lumière constituant une image (200), et
où l'élément de réflexion mobile dans le second état incliné réfléchit la lumière de l'élément émetteur de lumière dans une direction où la lumière n'est pas projetée en tant que lumière constituant l'image ; et
une unité de commande qui commande l'unité de modulation optique spatiale de type à réflexion et l'unité de source de lumière de sorte que la lumière constituant l'image conformément à un signal vidéo à entrer est projetée,
où l'unité de commande divise les trames (F) respectives de l'image en une période d'affichage (Fa) qui est une période pendant laquelle au moins un élément de la pluralité d'éléments émetteurs de lumière est amené à émettre de la lumière, et une période de non affichage (Fb) qui est une période pendant laquelle aucun de la pluralité d'éléments émetteurs de lumière n'est amené à émettre de la lumière,
où la période d'affichage et la période de non affichage sont subdivisées en sous-trames (SF) et, pour la période d'affichage, il existe plusieurs sous-trames (SFa) pour chaque couleur de la source lumineuse, où les sous-trames de chaque couleur sont concomitantes au temps d'émission de la couleur respective de la source lumineuse pendant la période d'affichage,
où chaque sous-trame (SFa) de la période d'affichage est divisée en une pluralité de sous-trames d'affichage de division (dSFa), et
où, pour chaque sous-trame d'affichage de division, l'état de l'élément de réflexion mobile est commandé pour être dans le premier état incliné ou dans le second état incliné, et
où l'unité de commande divise la pluralité d'éléments de réflexion mobiles dans l'unité de modulation optique spatiale de type à réflexion en une pluralité de groupes (160-1, 160-2), et détermine, parmi la pluralité de sous-trames d'affichage de division obtenues par chaque sous-trame d'affichage divisée, la sous-trame d'affichage de division dans laquelle l'élément de réflexion mobile est fixé dans le second état incliné, pour chacun de la pluralité des groupes de la pluralité des éléments de réflexion mobiles.

2. Dispositif d'affichage de type à projection (10) selon la revendication 1, dans lequel l'unité de commande détermine l'un quelconque de la pluralité de groupes (160-1, 160-2) qui est capable d'être commuté dans le premier état incliné conformément à un signal vidéo, dans toutes les sous-trames d'affichage de division (dSFa).

3. Dispositif d'affichage de type à projection (10) selon la revendication 1, dans lequel l'unité de commande change la pluralité des groupes (160-1, 160-2) en fonction d'un type d'image à afficher et du temps écoulé après que la pluralité des groupes (160-1, 160-2) a été configurée.

4. Dispositif d'affichage de type à projection (10) selon l'une quelconque des revendications 1 à 3, dans lequel l'unité de commande commande l'unité de modulation optique spatiale de type à réflexion pour permettre à l'état d'inclinaison de chacun de la pluralité d'éléments de réflexion mobiles d'être réglé pour chaque sous-trame incluse dans la période de non affichage de sorte qu'un rapport du temps pendant lequel chaque élément de réflexion mobile est dans le premier état d'inclinaison sur le temps pendant lequel il est dans le second état d'inclinaison soit constant pour une trame ou une pluralité des trames.

5. Dispositif d'affichage de type à projection selon l'une quelconque des revendications 1 à 4, dans lequel :
l'unité de commande divise en outre, parmi la pluralité de sous-trames (SF), chacune d'une pluralité de sous-trames de non affichage (SFb), qui sont les sous-trames comprises dans la période de non affichage, en une pluralité de sous-trames de non affichage divisées (dSFb), et
l'unité de commande commande l'unité de modulation optique spatiale de type à réflexion (20) pour permettre à l'état d'inclinaison de chacun de la pluralité des éléments de réflexion mobiles (21) d'être réglé pour chaque sous-trame de non affichage divisée (dSFb) incluse dans la période de non affichage (Fb) de sorte qu'un rapport du temps pendant lequel chaque élément de réflexion mobile est dans le premier état d'inclinaison sur le temps pendant lequel il est dans le second état d'inclinaison soit constant pour une trame ou une pluralité des trames.

6. Dispositif d'affichage de type à projection selon l'une quelconque des revendications 1 à 5, dans lequel l'unité de commande détermine un rapport de périodes de la pluralité des sous-trames d'affichage de division (dSFa) obtenues par la sous-trame d'affichage étant divisée pour être constante dans la pluralité des sous-trames d'affichage (SFa).

7. Dispositif d'affichage de type à projection selon l'une quelconque des revendications 1 à 5, dans lequel l'unité de commande détermine arbitrairement un rapport de périodes de la pluralité de sous-trames d'affichage de division (dSFa) obtenues par la sous-trame d'affichage divisée pour être constante, pour chaque sous-trame d'affichage (SFa).
